# EUROPEAN PATENT APPLICATION

(11) **EP 4 717 086 A1**
(43) Date of publication of application: **01.04.2026**
(21) Application number: 24203672.1
(22) Date of filing: 30.09.2024
(51) Int. Cl.: A01N 25/00, A01N 25/08, A01N 65/10, A01N 65/28, A01P 7/04

(54) **SYNERGISTIC INSECTICIDE COMPOSITIONS AND FORMULATIONS THEREOF**

(71) Applicant: Ross Lifescience USA Inc., Lorton, VA 22079 (US)
(72) Inventor: SRIDHAR, S., 411026 Maharashtra (IN); SANTOSH KUMAR, Hugar, 411026 Maharashtra (IN); KSHIRSAGAR, Rajendra, 411026 Maharashtra (IN); PEDIBHOTLA, Venkat, Virginia, 22079 (US); NAIR, Pavana, 411026 Maharashtra (IN)
(74) Representative: Calysta NV

(57) **Abstract**

The present disclosure provides an insecticide composition for controlling crawling insects, said composition comprising: *Pimpinella anisum* in an amount ranging from 1% to 50% by weight of the composition; *Syzygium aromaticum* in an amount ranging from 1% to 50% by weight of the composition; and rest being an excipient. The ingredients of the composition of the present disclosure exhibit functional reciprocity therebetween, and accordingly aid in repelling, reducing, preventing, killing, and/or controlling the population of crawling insects. The crawling insect is ants.

## Description

### FIELD OF THE INVENTION

The present disclosure relates generally to the field of insecticide composition. In particular, the present disclosure provides compositions and formulations for controlling various crawling insects. Also provided is a method for controlling crawling insects.

### BACKGROUND

Ants, such as carpenter ants and harvester ants, are insects that have the potential to cause nuisance or harm to persons and property.

Carpenter ants such as the black carpenter ant, the red carpenter ant, and the smaller carpenter ant are insect pests that cause major damage to buildings because they house their colonies in galleries they excavate in moist wood and sometimes, foam insulation. Carpenter ants do not always need a moist area to nest as they also use an old abandoned nest or wood hollowed out by termites. Carpenter ants do not eat the wood they remove during their nest-building activities but deposit it outside entrances to the colony in piles which include, in addition to the wood fragments, other debris from the nest, including bits of soil, empty seed coats, dead ants and parts of insects and remnants of other food scraps, creating an unhealthy environment for humans and domestic animals.

Harvester ants such as the California red harvester ants clear areas of grass around their nest and along forage trails radiating from the central nest, using the grass to construct nest mounds. Generally, nests are constructed in open areas and are a real problem on golf courses, recreational areas, and occasionally on lawns. They also hinder reseeding of areas as they collect the seed as a source of food. In addition, they can sting both humans and animals, causing great pain.

Ants sting humans and livestock, feed on germinating seeds and crop seedlings thereby reducing yields, and damage farm machinery which strikes ants' mounds. They thrive in wall spaces and detritus. In hospitals, they forage in soiled bandages and contaminate clean dressings and food with pathogenic microorganisms.

Numerous devices, agents, compositions, and formulations are already reported in the literature and are commercially available, capable of repelling, killing, or reducing the number of ants in a premise. However, these devices, agents/formulations still suffer from several limitations such as being expensive, ineffective, and exhibiting certain side-effects such as irritation, allergy, uneasiness, reduction in oxygen content, etc.

There is, therefore, a need in the art to develop new and improved compositions/ formulations that repel, kill, prevent, reduce, and control the numbers of various crawling insects such as ants, and overcome one or more problems associated with the conventional compositions/formulations thereof. The present disclosure satisfies the existing as well as other needs.

### SUMMARY

The present disclosure addresses these and other unmet deficiencies inherent in the relevant insecticide arts and overcomes them by providing compositions/formulations that exhibit enhanced efficacy and economic significance.

The present disclosure relates to an insecticide composition. Specifically, the present disclosure relates to an insecticide composition for controlling crawling insects, said composition comprising: *Pimpinella anisum* in an amount ranging from 1% to 50% by weight of the composition; *Syzygium aromaticum* in an amount ranging from 1% to 50% by weight of the composition; and rest being an excipient.

The present disclosure further relates to a solid insecticide formulation for controlling crawling insects, said formulation comprising: *Pimpinella anisum* in an amount ranging from 1% to 50% by weight of the formulation; *Syzygium aromaticum* in an amount ranging from 1% to 50% by weight of the formulation; and rest being an excipient.

The present disclosure still further relates to a liquid or a semi-solid insecticide formulation for controlling crawling insects, said formulation comprising: *Pimpinella anisum* in an amount ranging from 1% to 50% by weight of the formulation; *Syzygium aromaticum* in an amount ranging from 1% to 50% by weight of the formulation; and rest being an excipient.

The present disclosure also relates to a method for controlling crawling insects. The method for controlling crawling insects comprises, providing a composition comprising: *Pimpinella anisum* in an amount ranging from 1% to 50% by weight of the composition; *Syzygium aromaticum* in an amount ranging from 1% to 50% by weight of the composition; and rest being an excipient.

### DETAILED DESCRIPTION

The embodiments herein and the various features and advantageous details thereof are explained more comprehensively with reference to the non-limiting embodiments that are detailed in the following description. Descriptions of well-known components and processing techniques are omitted to not unnecessarily obscure the embodiments herein. The examples used herein are intended merely to facilitate an understanding of how the embodiments herein may be practiced and to further enable those of skill in the art to practice the embodiments herein. Accordingly, the examples should not be construed as limiting the scope of the embodiments herein.

Unless otherwise specified, all terms used in disclosing the invention, including technical and scientific terms, have the meaning as commonly understood by one of the ordinary skills in the art to which this invention belongs. Through further guidance, term definitions may be included to better appreciate the teaching of the present disclosure.

As used in the description herein, the meaning of "a," "an," and "the" includes plural reference unless the context dictates otherwise. Also, as used in the description herein, the meaning of "in" includes "in" and "on" unless the context dictates otherwise.

As used herein, the terms "comprise", "comprises", "comprising", "include", "includes", and "including" are meant to be non-limiting, i.e., other steps and other ingredients that do not affect the end of result can be added. The above terms encompass the terms "consisting of" and "consisting essentially of'.

The terms "weight percent", "percent by weight", "% by weight", and variations thereof, as used herein, refer to the concentration of a substance as the weight of that substance divided by the total weight of the composition and multiplied by 100. It is understood that, as used here, "percent", "%", and the like are intended to be synonymous with "weight percent", etc.

The terms `pest' and 'insect' are used synonymously and interchangeably throughout the specification. The terms `pest' or 'insect' as used herein refers to any insect or small animal that is perceived as pest/insect mainly due to their crawling behavior. Crawling insects or pests are the ones that can "crawl" into our homes and are difficult to eliminate. The non-limiting examples include bed bugs, ants, cockroaches, beetles, spiders, crickets, centipedes, millipedes, pill bugs, whitefish, etc.

The term `ant or `ants' as used herein refers to each species of ants reported in the literature. It includes both male and female ants. The term further includes them in their different stages of life cycles such as egg, larva, pupa, and adult stage.

The term 'controlling' as used herein refers to attracting, repelling, killing, preventing, and/or reducing the population of various crawling pest(s) and/or insect(s). Attracting includes but not limited to entice, draw, captivate, dazzle, impress, occupy, involve, absorb, bewitch, enthral, allure, engage, busy, enchant, mesmerize, immerse, engross, influence, impact, and movement of the various crawling pest(s) and/or insect(s) towards the composition(s)/ formulation(s) of the present disclosure. Repelling includes but not limited to drive away, force back, force away, repulse, force back, hold off, ward off, fend off, stand-off, keep at bay, repulsive, distasteful, and the likes towards the composition(s)/ formulation(s) of the present disclosure. Killing, preventing, and/or reducing the population of various crawling pest(s) and/or insect(s) includes but not limited to homicide, elimination, putting to death, execution, destruction, decimation, extermination, eradication, annihilation, wiping out, lethal, fatal, causing death, life-threatening, destructive to crawling insects, and the likes.

In one or more embodiments, the numbers expressing quantities of ingredients, properties such as concentration, reaction conditions, and so forth, used to describe and claim certain embodiments of the invention are to be understood as being modified in some instances by the term "about". Accordingly, in one or more embodiments, the numerical parameters outlined in the written description are approximations that can vary depending on the desired properties sought to be obtained by a particular embodiment. In one or more embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values outlined in the specific examples are reported as precisely as practicable.

The recitation of ranges of values herein is merely intended to serve as a shorthand method of referring individually to each separate value falling within the range. Unless otherwise indicated herein, each value is incorporated into the specification as if it were individually recited herein.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

The present disclosure addresses these and other unmet deficiencies inherent in the relevant insecticide arts and overcomes them by providing compositions/formulations that exhibit enhanced efficacy and economic significance.

The present disclosure is on the premise of a surprising discovery that when *Pimpinella anisum* and *Syzygium aromaticum* are included as part of an insecticide composition in the weight percentages as defined herein, they exhibit exceptional functional reciprocity and synergistic activity, and afford dramatic improvement in controlling the population of crawling insects (such as ants) as compared to the individual ingredients. The observed synergistic effect is unexpected and surprising. It further provides economic significance by reducing the amount of each active agent.

The present disclosure relates to an insecticide composition for controlling crawling insects, said composition comprising: *Pimpinella anisum* in an amount ranging from 1% to 50% by weight of the composition; *Syzygium aromaticum* in an amount ranging from 1% to 50% by weight of the composition; and rest being an excipient.

In one or more embodiments, the composition comprises *Pimpinella anisum* in an amount ranging from 1% to 30% by weight of the composition and *Syzygium aromaticum* in an amount ranging from 1% to 30% by weight of the composition.

In one or more embodiments, the insecticide composition includes *Pimpinella anisum* in an amount ranging from about 1% to about 45% by weight, including 1% to 40%, 1.5% to 35%, 1.5% to 30%, 2% to 30%, 2% to 25%, 1.5% to 22%, 1% to 20%, 2% to 15%, 3% to 12%, 3% to 10%, or 4% to 10%.

In one or more embodiments, the insecticide composition includes *Syzygium aromaticum* in an amount ranging from about 1% to about 45% by weight, including 1% to 40%, 1.5% to 35%, 1.5% to 30%, 2% to 30%, 2% to 25%, 1.5% to 22%, 1% to 20%, 2% to 15%, 3% to 12%, 3% to 10%, or 4% to 10%.

In one or more embodiments, the composition is used for controlling crawling insects comprising, providing an insecticide composition comprising: *Pimpinella anisum* in an amount ranging from 1% to 50% by weight of the composition; *Syzygium aromaticum* in an amount ranging from 1% to 50% by weight of the composition; and rest being an excipient.

In one or more embodiments, the composition comprises a whole of or a part of or an extract of or an oil of *Pimpinella anisum.* In one or more embodiments, the composition comprises roots, leaves, twigs, flowers, seeds, or a combination thereof of *Pimpinella anisum.* In one or more embodiments, the composition comprises leaves or twigs of *Pimpinella anisum.* In one or more embodiments, the composition comprises an oil of *Pimpinella anisum.* In one or more embodiments, the composition comprises seed oil of *Pimpinella anisum.*

In one or more embodiments, the composition comprises: a whole of or a part of or an extract of or oil (clove oil) of *Syzygium aromaticum.* In one or more embodiments, the composition comprises roots, leaves, fruits, stems, roots, seeds, buds, or a combination thereof of *Syzygium aromaticum.* In one or more embodiments, the composition comprises fruits, leaves, buds, or a combination thereof of *Syzygium aromaticum.*

In one or more embodiments, the composition of the present disclosure aids in repelling, killing, preventing, and/or reducing various crawling insects.

In one or more embodiments, the insect is selected from the group comprising of: bed bugs, ants, cockroaches, beetles, spiders, crickets, centipedes, millipedes, pill bugs, and whitefish.

In one or more embodiments, the insect is an ant.

In one or more embodiments, the excipient is selected from any or a combination of a phagostimulant, an attractant, a filler, a perfume, a preservative, an adhesive, a binder, a solvent, a wetting agent, a solubilizer, a hardening agent, an emulsifier, a diluent, a lubricant, a colouring agent, a lower alcohol, anti-freezing agent, propellant, humectant, anti-caking agent, a protein source, flavoring agent, and a neutralization base.

Exemplary phagostimulant (s) include, without limitation, carbohydrates such as fructose, arabinose, sorbitol, maltose, glucose, and lactose, and amino acids such as glycine, alanine, ornithine, phenylalanine, isoleucine and valine, ghee, sugar powder, milk powder, baking soda, onion powder, coco peanut butter, sorbitol powder, inverted sugar, amaranth (rajgira) powder, honey, and the like, or one or more combinations thereof. However, a person skilled in the art would appreciate that any other phagostimulant(s) can be utilized to serve the intended purpose.

Exemplary attractant(s) include, without limitation, pheromones, plant volatiles, flower oils, sugars, cocoa butter, onion powder, proteins, and the like, or one or more combinations thereof. However, a person skilled in the art would appreciate that any other attractant(s) can be utilized to serve the intended purpose.

Exemplary filler(s) or burnable base(s) or thickener(s) include, without limitation, Aerosil 200, Paraffin wax, sawdust powder, Joss (Jiggit powder), coconut shell powder, areca nut shell powder, wood powder, wood chips, wood fiber, wood charcoal, vegetable shell powders (for example, cocoa shell), peanut shell, fibrous waste (for example, rayon waste, cotton waste, waste paper, and mineral fibers), flour, cellulose powder, wheat flour, and the like, or one or more combinations thereof. However, a person skilled in the art would appreciate that any other filler(s) can be utilized to serve the intended purpose.

Exemplary perfume(s)/fragrance agent, without limitation, various commercially available camphors (*karpur*) of natural or synthetic origin, sweet orange essential oil (*Citrus sinensis, Citrus aurantium* (CAS 8028-48-6) *or Aurantium dulcis*)*,* lemon oil, lavender oil, peppermint oil, eucalyptus oil, citronella oil, lime oil, yuzu oil, jasmine oil, cypress oil, green tea essential oil, limonene, α-pinene, linalool, geraniol, phenylethyl alcohol, amylcinnamic aldehyde, cuminaldehyde, benzyl acetate, Pure Soul MMN37683, Classic Guggul MMN37681, Lemony perfume, and combinations thereof. However, a person skilled in the art would appreciate that any other perfume(s) can be utilized to serve the intended purpose.

Exemplary preservative(s) include, without limitation, sodium benzoate, potassium sorbate, phenoxyethanol, p-hydroxybenzoic acid esters, sorbic acid, benzoic acid, propionic acid or salts, Butylated Hydroxytoluene (BHT), Butylated Hydroxy chloride (BHC), citric acid, sodium chloride, Citric anhydride, and the like, or one or more combinations thereof. However, a person skilled in the art would appreciate that any other preservative(s) can be utilized to serve the intended purpose.

Exemplary adhesive(s) include, without limitation, Joss (Jiggit powder), corn starch, wheat starch, potato starch, pea starch, Tamarind starch, and the like, or one or more combinations thereof. However, a person skilled in the art would appreciate that any other adhesive (s) can be utilized to serve the intended purpose.

Exemplary binder(s) include, without limitation, guar gum, xanthan gum, starch, for example, potato starch, maize starch, corn starch, tamarind seed powder, water, povidone, copovidone, kaolin, glue (any commercially available) and the like, or one or more combinations thereof. However, a person skilled in the art would appreciate that any other binder(s) can be utilized to serve the intended purpose.

Exemplary solvent(s) include, without limitation, hydrocarbons such as aliphatic hydrocarbon (C₅ to C₂₀ carbon atoms having branched and/or unbranched chains), aromatic hydrocarbon, and alicyclic hydrocarbon, diethyl phthalate, alcohols such as ethanol, isopropanol (isopropyl alcohol) and methanol, esters such as fatty acid ester, vegetable oils, animal oils, and water. Further, among the aliphatic hydrocarbons, a paraffinic hydrocarbon (linear or branched saturated hydrocarbon), *inter alia,* normal paraffin (n-paraffin) is preferably used. It further includes higher fatty acid esters and alcohols. It further includes D-80, D-100, or a mixture thereof in the required amount. Preferable examples of organic solvents include higher fatty acid esters and alcohols. The higher fatty acid ester preferably has 16 to 20 carbon atoms in total. Examples of such a higher fatty acid ester include isopropyl myristate, butyl myristate, hexyl laurate, isopropyl palmitate, and combinations thereof. However, a person skilled in the art would appreciate that any other solvent(s) can be utilized to serve the intended purpose.

Exemplary wetting agent(s) include, without limitation, 1,2-propylene glycol, glycerol, hyaluronate sodium, and the like, or one or more combinations thereof. However, a person skilled in the art would appreciate that any other wetting agent(s) can be utilized to serve the intended purpose.

Exemplary solubilizer(s) include, without limitation, isomeryl alcohol APEO, PEG-40 PEG-60, polysorbate 20, the Tween 80, and the like, or one or more combinations thereof. However, a person skilled in the art would appreciate that any other solubilizer(s) can be utilized to serve the intended purpose.

Exemplary hardening agent(s) include, without limitation, water-miscible sylvite, sodium salt, magnesium salts, calcium salt, and the like, or one or more combinations thereof. However, a person skilled in the art would appreciate that any other hardening agent(s) can be utilized to serve the intended purpose.

Exemplary emulsifier(s) include, without limitation, hydrogenated lecithin, C12-16 Alcohols, palmitic acid (e.g., Biophillic^{™} H) and cetyl alcohol, glyceryl stearate, PEG-75 stearate, ceteth-20, steareth-2 (Emulium^{®} Delta), Tween (Tween 20, Tween 40, Tween 60 and Tween 80), Atlas G-50002L- LQ (CQ), Atlox 4913- LQ (MV), carboxymethyl cellulose, and the like, or one or more combinations thereof. However, a person skilled in the art would appreciate that any other emulsifier(s) can be utilized to serve the intended purpose.

Exemplary diluent(s) include, without limitation, microfine cellulose, lactose, starch, pregelatinized starch, calcium carbonate, calcium sulphate, sugar, dextrates, dextrin, dextrose, dibasic calcium phosphate dihydrate, tribasic calcium phosphate, kaolin, magnesium carbonate, magnesium oxide, maltodextrin, mannitol, potassium chloride, powdered cellulose, sodium chloride, sorbitol, talc, silicon oil, and the like, or one or more combinations thereof. However, a person skilled in the art would appreciate that any other diluent(s) can be utilized to serve the intended purpose.

Exemplary lubricant(s) include, without limitation, zinc stearate, magnesium stearate, stearic acid, calcium stearate, Vegetable stearin, and the like, or one or more combinations thereof. However, a person skilled in the art would appreciate that any other lubricant(s) can be utilized to serve the intended purpose.

Exemplary colouring agent(s) include, without limitation, E102 Tartrazine, E104 Quin- oline Yellow, E110 Sunset Yellow FCF, E120 - Cochineal, carminic acid, Carmines, E122 Azorubine (Carmoisine), E123 Amaranth, E124 Ponceau 4R (Cochineal Red A), E127 Erythrosine, E129 Allura Red, E131 Patent Blue, and the like, or one or more combinations thereof. However, a person skilled in the art would appreciate that any other colouring agent(s) can be utilized to serve the intended purpose.

Exemplary lower alcohol(s) include, without limitation, ethanol, ethylene glycol, propane diols, glycerin, butanediol, and the like, or one or more combinations thereof. However, a person skilled in the art would appreciate that any other lower alcohol(s) can be utilized to serve the intended purpose.

Exemplary anti-freezing agent(s) include, without limitation, ethylene glycol, propane diols, glycerine or the urea, glycol (mono ethylene glycol, diethylene glycol, polypropylene glycol, Propylene glycol, polyethylene glycol), glycerine, urea, magnesium sulfate heptahydrate, sodium chloride and the like, or one or more combinations thereof. However, a person skilled in the art would appreciate that any other freezing agent(s) can be utilized to serve the intended purpose.

Exemplary propellant(s) include, without limitation, liquefied petroleum gas (LPG), dimethyl ether (DME), nitrogen gas, carbonic acid gas, nitrous oxide, compressed air, and the like, or one or more combinations thereof. However, a person skilled in the art would appreciate that any other propellant(s) can be utilized to serve the intended purpose.

Exemplary humectant(s) include, without limitation, glycerine, glycerol, propylene glycol, butylene glycol, aloe-vera gel, hexylene glycol, glyceryl triacetate, sodium hyaluronate, and combinations thereof. However, a person skilled in the art would appreciate that any other humectant(s) can be utilized to serve the intended purpose.

Exemplary anti-caking agent(s) include, without limitation, Calcium carbonate and carbonates, Calcium hydrogen carbonate, Calcium phosphate, Monocalcium orthophosphate, Dicaclium orthophosphate, Tricalcium orthophosphate, Magnesium phosphate, Monomagnesium phosphate, Dimagnesium orthophosphate, Trimagnesium orthophosphate, Ferric ammonium citrate, Mannitol, Cellulose, Microcrystalline cellulose, Powdered cellulose, Sodium carbonate and carbonates, Sodium hydrogen carbonate. Sodium sesquicarbonate, Magnesium carbonate, Magnesium hydrogen carbonate, Magnesium oxide, Sodium ferrocyanide, Potassium ferrocyanide, Ferrous hexacyanomanganate, Calcium ferrocyanide, Bone phosphate, Sodium silicate and silicates, Sodium metasilicate, Silicon dioxide, Fused silica, Calcium silicate, Magnesium silicate. Magnesium trisilicate, Talc, Sodium aluminosilicate, Calcium aluminium silicate, Potassium aluminium silicate, Zinc silicate, Bentotine, Aluminium silicate, Potassium silicate, Polydimethylpolysiloxane, Isomalt (isomaltitol), and the like, and combinations thereof. However, a person skilled in the art would appreciate that any other anti-caking agent(s) can be utilized to serve the intended purpose.

Exemplary protein source(s) include, without limitation, egg yolk. However, a person skilled in the art would appreciate that any other protein source(s) can be utilized to serve the intended purpose.

Exemplary flavouring agent(s) include, without limitation, orange, banana, strawberry, cherry, wild cherry, lemon, cardamom, mint, menthol, vanillin, ethyl vanillin, and the like, and combinations thereof. However, a person skilled in the art would appreciate that any other flavouring agent (s) can be utilized to serve the intended purpose.

Exemplary neutralization base(s) include, without limitation, triethanolamine. However, a person skilled in the art would appreciate that any other neutralization base(s) can be utilized to serve the intended purpose.

While one or more embodiments of the present disclosure enumerates and describes a list of excipients that may be used in the composition to serve an intended purpose, it should be appreciated that one or more excipient(s) may also serve more than one function, obviating the need of inclusion of separate excipients for the specified purpose. Although several embodiments of the present disclosure name a few of the commonly used excipients, any other excipient(s) known to or appreciated by a skilled person can also be used to realize the advantageous compositions of the present disclosure.

In one or more embodiments, the composition is formulated into a liquid form, a semi-solid form, a solid form, a gel, or a gaseous form.

In one or more embodiments, the composition is formulated into a cream, a lotion, an ointment, a gel, a spray, a vaporizer, a paste, a powder, a dust, a wax, a chalk, granules, tablet, pellets, a burn paper, a coil, an incense stick, pellets, a bait, cordages, a candle, a sealing agent, a caulk, a patch, a mat, a filler, a wood filler, a liquid vaporizer, an aerosol, an emulsion, a suspension, a micro-emulsion, a varnish dispersion, a fumigant, or a solution.

The present disclosure further relates to a solid insecticide formulation for controlling crawling insects, said formulation comprising: *Pimpinella anisum* in an amount ranging from 1% to 50% by weight of the formulation; *Syzygium aromaticum* in an amount ranging from 1% to 50% by weight of the formulation; and rest being an excipient.

In one or more embodiments, the formulation comprises a granule, a paste, a powder, a tablet, a dust, a wax, a chalk, pellets, a burn paper, a coil, an incense stick, pellets, a bait, cordages, a candle, a sealing agent, a caulk, a patch, a mat, a filler, a wood filler, a self-ignite formulation, or a vaporizer.

The present disclosure still further relates to a liquid or a semi-solid insecticide formulation for controlling crawling insects, said formulation comprising: *Pimpinella anisum* in an amount ranging from 1% to 50% by weight of the formulation; *Syzygium aromaticum* in an amount ranging from 1% to 50% by weight of the formulation; and rest being an excipient.

In one or more embodiments, the formulation comprises a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.

The present disclosure also relates to a method for controlling crawling insects comprising, providing an insecticide composition comprising: *Pimpinella anisum* in an amount ranging from 1% to 50% by weight of the composition; *Syzygium aromaticum* in an amount ranging from 1% to 50% by weight of the composition; and rest being an excipient.

*Pimpinella anisum* (commonly known as Anise), is an annual herb of the parsley family (Apiaceae), cultivated chiefly for its fruits, called aniseed, the flavor of which resembles that of licorice. Native to Egypt and the eastern Mediterranean region, anise is cultivated in southern Europe, southern Russia, the Middle East, North Africa, Pakistan, China, Chile, Mexico, and the United States. Star anise, an unrelated plant, has a similar flavor profile. In the Mediterranean region and Asia, aniseed is commonly used in meat and vegetable dishes. It makes a soothing herbal tea and has been used medicinally from prehistoric times. The essential oil is used to flavour absinthe, anisette, and Pernod liqueurs.

Cloves are the aromatic flower buds of *Syzygium aromaticum* tree from the family *Myrtaceae.* They are native to the Maluku Islands, or Moluccas, in Indonesia, and are commonly used as a spice, flavoring, or fragrance in consumer products, such as toothpaste, cosmetics, etc. It is also found to occur in the Konkan region of India.

In accordance with an embodiment, the composition of the present disclosure is realized by using extracts or oils or any plant part thereof commercially procured from the following manufacturers:

| **Sr. No.** | **INGREDIENTS** | **MANUFACTURER** |
|---|---|---|
| **1** | *Pimpinella anisum* (commonly known as Anise) | Nishant Aromas Private Limited, Plot No. 30, 31 & 61, Sidcul, Haridwar-249 403, Uttarakhand, India. |
| **2** | *Syzygium aromaticum* (commonly known as Clove) | Katyani Exports, BT-1/94, Mangolpuri Industrial Area, Phase-1, Delhi- 110 083. |

The compositions and formulations of the present disclosure can be manufactured by any conventional method, known to or appreciated by a person skilled in the art working in the pertinent field to serve the intended purpose.

The ingredients of the composition of the present disclosure exhibit functional reciprocity therebetween, and accordingly, aids in repelling, killing, preventing, and/or reducing the population of indoor as well as outdoor crawling insects. Compositions/formulations of the present disclosure also exhibit superior storage stability. The composition/formulations are safe and have a good aroma effect.

### EXAMPLE

The disclosure will now be illustrated with working examples, which are intended to illustrate the working of disclosure and not intended to take restrictively to imply any limitations on the scope of the present disclosure. Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices, and materials are described herein. It is to be understood that this disclosure is not limited to particular methods, and experimental conditions described, as such methods and conditions may vary.

### ANT BAIT TABLET FORMULATION

**Table 1: Ant Bait tablet formulation and bio-efficacy thereof**

| **Ingredients** | **Role in formulation** | **Formulations (in %w/w)** | | | | | | |
|---|---|---|---|---|---|---|---|---|
| | | **F1** | **F2** | **F3** | **F4** | **F5** | **F6** | **F7** |
| *Pimpinella anisum* (Anise seed oil) | Active agent | 10 | 15 | 20 | - | - | - | 4 |
| *Syzygium aromaticum* (Clove bud oil) | Active agent | - | - | - | 10 | 15 | 20 | 4 |
| Cellulose Powder | Filler | 25 | 25 | 25 | 25 | 25 | 25 | 25 |
| Milk Powder | Phagostimulant | 32.9 5 | 32.9 5 | 32.9 5 | 32.9 5 | 32.9 5 | 32.9 5 | 32.9 5 |
| Inverted Sugar | Phagostimulant | 1 | 1 | 1 | 1 | 1 | 1 | 1 |
| Citric Acid | Preservative | 0.05 | 0.05 | 0.05 | 0.05 | 0.05 | 0.05 | 0.05 |
| BHT | Preservative | 0.5 | 0.5 | 0.5 | 0.5 | 0.5 | 0.5 | 0.5 |
| Carboxy Methyl Cellulose | Binder | 0.5 | 0.5 | 0.5 | 0.5 | 0.5 | 0.5 | 0.5 |
| Sugar Powder (QS) | Phago-stimulant | 30 | 25 | 20 | 30 | 25 | 20 | 32 |
| **TOTAL** | | 100 | 100 | 100 | 100 | 100 | 100 | 100 |
| **Efficacy** - **Ants knock-down time KT50 (Days)** | | 7 | 5 | 4 | 9 | 7 | 5 | 3 |

As can be seen in **Table 1** above, the formulation of the present disclosure **(F7)** affords improved control of ants as compared to the formulations of the individual active agents **(F1 to F6)** and further reduces the amount of each of the active agents. Accordingly, it could be concluded that the composition/ formulation of the present disclosure offers significant efficacy in controlling various indoor and outdoor insects/pests as compared to the compositions/ formulations of the individual active agent(s).

### Method of preparation of Bait Tablet:

The above formulation was prepared by taking all the ingredients in wt% as disclosed in Table 1 above. The process comprises the following steps:
**Preparation of Phase A:** Milk Powder, Inverted sugar, Citric Acid, Sugar Powder, cellulose powder, Butylated Hydroxy Toluene, and Carboxy Methyl Cellulose were taken in the given amount and added to a mixer grinder to obtain a powder mixture.
**Preparation of Phase B:** The active agent(s) viz. Anise oil and clove oil were taken in a vessel and stirred to obtain an oil blend.

The oil blend obtained in Phase-B was added to the powder mixture obtained in Phase-A and stirred in a mixer grinder to obtain a homogenous mixture free of any lumps, and formulated into the bait tablets (1.5g) by using the conventional mold, which was later used for the efficacy study.

### Efficacy Study Protocol:

The bioefficacy protocol for the present disclosure is derived from the United States Environmental Protection Agency (US-EPA) guideline entitled OCSPP 810.3500: Premises Treatments protocol, with some modifications.
For the efficacy study, user-friendly cleanable plastic crates having size of length 78 cm, a breadth of 56 cm, and a height of 40 cm were used. 100 red fire ants were released in each container and kept in there for about 24 hrs for acclimatization. To prevent the escape of the ants, silicone oil was applied to the 5cm band at the top open end of the internal surface of each crate.
For each treatment group, about 100 ants were released in each crate. Post 24 hours, preweighed four bait tablets were placed in four corners of each container placed equidistant from the harborage. One crate is kept as a control group wherein 100 ants are released. The control group was provided with placebo samples (without containing any active agent or formulation). Each crate is provided with water-soaked cotton fixed in an Eppendorf vial wherein one open end is the source of water for the experimental pest population. Observations are interpreted in Knock-down time [KT₅₀ is the time (in minutes) needed to knock down 50% of the ants population used for an experiment).

### ANT BAIT GEL FORMULATION

**Table 2: Ant Bait Gel formulation and bio-efficacy thereof**

| **Sr. No** | **Ingredients** | **Role in formulation** | **Formulations (in %w/w)** | | | | | | |
|---|---|---|---|---|---|---|---|---|---|
| | | | **F1** | **F2** | **F3** | **F4** | **F5** | **F6** | **F7** |
| **1** | *Pimpinella anisum* (Anise seed oil) | Active agent | 5 | 10 | 15 | - | - | - | 2.5 |
| **2** | *Syzygium aromaticum* (Clove bud oil) | Active agent | - | - | - | 5 | 10 | 15 | 2.5 |
| **3** | Milk Powder | Phagostimulant | 10 | 10 | 10 | 10 | 10 | 10 | 10 |
| **4** | Egg Yolk Powder | Phagostimulant | 10 | 10 | 10 | 10 | 10 | 10 | 10 |
| **5** | Honey | Phagostimulant | 20 | 20 | 20 | 20 | 20 | 20 | 20 |
| **6** | Invert Sugar | Phagostimulant | 5 | 5 | 5 | 5 | 5 | 5 | 5 |
| **7** | Citric Acid | Preservative | 0.1 | 0.1 | 0.1 | 0.1 | 0.1 | 0.1 | 0.1 |
| **8** | Erythritol | Phagostimulant | 5 | 5 | 5 | 5 | 5 | 5 | 5 |
| **9** | Wheat Flour | Filler | 5 | 5 | 5 | 5 | 5 | 5 | 5 |
| **10** | Butylated Hydroxy Toluene | Preservative | 0.4 | 0.4 | 0.4 | 0.4 | 0.4 | 0.4 | 0.4 |
| 11 | Xanthan Gum Sol. (5% Sol.) | Binder | 5 | 5 | 5 | 5 | 5 | 5 | 5 |
| 12 | Soyabean Oil | Phagostimulant | 5 | 5 | 5 | 5 | 5 | 5 | 5 |
| 13 | Amul Ghee | Phagostimulant | 5 | 5 | 5 | 5 | 5 | 5 | 5 |
| 14 | Strawberry Flavor | Flavouring agent | 0.5 | 0.5 | 0.5 | 0.5 | 0.5 | 0.5 | 0.5 |
| 15 | Water | Mixing | 5 | 5 | 5 | 5 | 5 | 5 | 5 |
| 16 | Sugar Powder (QS) | Phagostimulant | 19 | 14 | 9 | 19 | 14 | 9 | 19 |
| **Total** | | | 100 | 100 | 100 | 100 | 100 | 100 | 100 |
| **Efficacy** - **Ants knock-down time KT50 (Days)** | | | 7 | 5 | 3.5 | 9 | 7.5 | 4 | 2 |

As can be seen in **Table 2** above, the formulation of the present disclosure **(F7)** affords improved control of ants as compared to the formulations of the individual active agents **(F1 to F6)** and further reduces the amount of each of the active agents. Accordingly, it could be concluded that the composition/ formulation of the present disclosure offers significant efficacy in controlling various indoor and outdoor insects/pests as compared to the compositions/ formulations of the individual active agent(s).

### Method of preparation of Bait Gel:

The above formulation was prepared by taking all the ingredients in wt% as disclosed in Table 2 above. The process comprises the following steps:
**Preparation of Phase A:** Milk powder, egg yolk powder, citric acid, sugar powder, and wheat flour were taken in the given amount and added to a mixer grinder to obtain a powder mixture.
**Preparation of Phase B:** Anise oil, clove oil, ghee, Butylated hydroxytoluene, honey, Invert Sugar, soyabean oil, and strawberry flavor were taken in a vessel, mixed, and stirred to obtain a blend.
**Preparation of Phase C:** A given amount of Erythritol was dissolved in water and mixed with Xanthan gum solution to have Phase C.
The solution obtained in Phase C was added to the blend obtained in Phase B under stirring to obtain a blended solution. The blended solution was then added to the powder mixture obtained in Phase A under stirring to obtain a gel free of any lumps, which was later used for the efficacy study.

### ANT BAIT GRANULAR FORMULATION

**Table 3: Ant Bait Granular formulation and bio-efficacy thereof**

| **Sr. No** | **Ingredients** | **Role in formulation** | **Formulations (in %w/w)** | | | | | | |
|---|---|---|---|---|---|---|---|---|---|
| | | | **F1** | **F2** | **F3** | **F4** | **F5** | **F6** | **F7** |
| 1 | *Pimpinella anisum* (Anise seed oil) | Active agent | 5 | 10 | 15 | - | - | - | 2 |
| 2 | *Syzygium aromaticum* (Clove bud oil) | Active agent | - | - | - | 5 | 10 | 15 | 2 |
| 3 | Strawberry Flavor | Flavouring agent | 0.7 | 0.7 | 0.7 | 0.7 | 0.7 | 0.7 | 0.7 |
| 4 | Sugar Solution (50:50) | Phagostimulant | 5 | 5 | 5 | 5 | 5 | 5 | 5 |
| 5 | Egg Yolk Powder | Phagostimulant | 5 | 5 | 5 | 5 | 5 | 5 | 5 |
| 6 | Wheat granules | Filler | 84.3 | 81.3 | 77.3 | 85.3 | 81.3 | 77.3 | 84.3 |
| **Total** | | | 100 | 100 | 100 | 100 | 100 | 100 | 100 |
| **Efficacy** - **Ants knock-down time KT50 (Days)** | | | 10 | 8 | 6 | 11 | 9 | 7.5 | 5 |

As can be seen in **Table 3** above, the formulation of the present disclosure **(F7)** affords improved control of ants as compared to the formulations of the individual active agents **(F1 to F6)** and further reduces the amount of each of the active agents. Accordingly, it could be concluded that the composition/ formulation of the present disclosure offers significant efficacy in controlling various indoor and outdoor insects/pests as compared to the compositions/ formulations of the individual active agent(s).

### Method of preparation of Bait Tablet:

The above formulation was prepared by taking all the ingredients in wt% as disclosed in Table 3 above. The process comprises the following steps:
**Preparation of Phase A:** Wheat granules and egg yolk powder were taken in the given amount and blended in a bender to obtain a mixture.
**Preparation of Phase B:** Anise oil, clove oil, and strawberry flavor were taken in a vessel, mixed, and stirred to obtain a blend.
**Preparation of Phase C:** The given amount of sugar was dissolved in water to obtain a sugar solution.
The blend obtained in Phase B was added to the mixture obtained in Phase A under stirred to obtain a blended mixture. The sugar solution obtained in Phase C was added to the blended mixture under stirring to obtain a paste formulation, which was later used for the efficacy study.

Without further elaboration, it is believed that one skilled in the art can, using the description herein, utilize the present disclosure to its fullest extent. The embodiments described herein are to be construed as illustrative and not as constraining the remainder of the disclosure in any way whatsoever. While the preferred embodiments of the disclosure have been shown and described, many variations and modifications thereof can be made by one skilled in the art without departing from the spirit and teachings of the invention. Accordingly, the scope of protection is not limited by the description set out above but is only limited by the claims, including all equivalents of the subject matter of the claims. The disclosures of all patents, patent applications, and publications cited herein are hereby incorporated herein by reference, to the extent that they provide procedural or other details consistent with and supplementary to those set forth herein.

### ADVANTAGES

The present disclosure provides insecticide compositions/formulations that overcome the limitations associated with conventional compositions/formulations.

The present disclosure provides insecticide compositions/formulations for repelling and/or reducing and/or controlling various crawling insects.

The present disclosure provides insecticide compositions/formulations for repelling and/or reducing and/or controlling the population of ants.

The present disclosure provides insecticide compositions/formulations that exhibit high repellence and insecticide activity.

The present disclosure provides insecticide compositions/formulations that are safe.

The present disclosure provides insecticide compositions/formulations that exhibit synergistic activity /functional reciprocity and are economical and easy to prepare.

## Claims

1. An insecticide composition for controlling crawling insects, said composition comprises:
*Pimpinella anisum* in an amount ranging from 1% to 50% by weight of the composition;
*Syzygium aromaticum* in an amount ranging from 1% to 50% by weight of the composition; and
rest being an excipient.

2. The composition as claimed in claim 1, wherein the composition comprises *Pimpinella anisum* in an amount ranging from 1% to 30% by weight of the composition and *Syzygium aromaticum* in an amount ranging from 1% to 30% by weight of the composition.

3. The composition as claimed in claim 1, wherein the excipient is selected from any or a combination of a phagostimulant, an attractant, a filler, a perfume, a preservative, an adhesive, a binder, a solvent, a wetting agent, a solubilizer, a hardening agent, an emulsifier, a diluent, a lubricant, a colouring agent, a lower alcohol, an anti-freezing agent, a propellant, a humectant, an anti-caking agent, a protein source, a flavouring agent, and a neutralization base.

4. The composition as claimed in claim 1, wherein the insect is selected from the group comprising of: bed bugs, ants, cockroaches, beetles, spiders, crickets, centipedes, millipedes, pill bugs, and whitefish.

5. The composition as claimed in claim 1, wherein the composition is used for controlling crawling insects comprising, providing an insecticide composition comprising: *Pimpinella anisum* in an amount ranging from 1% to 50% by weight of the composition; *Syzygium aromaticum* in an amount ranging from 1% to 50% by weight of the composition; and rest being an excipient.

6. The composition as claimed in claim 1, wherein the composition is formulated into a liquid form, a semi-solid form, a solid form, or a gaseous form.

7. A solid insecticide formulation for controlling crawling insects, said formulation comprises:
*Pimpinella anisum* in an amount ranging from 1% to 50% by weight of the formulation;
*Syzygium aromaticum* in an amount ranging from 1% to 50% by weight of the formulation; and
rest being an excipient.

8. The formulation as claimed in claim 7, wherein the formulation comprises a granule, a paste, a powder, a dust, a wax, a chalk, a tablet, pellets, a burn paper, a coil, an incense stick, pellets, a bait, cordages, a candle, a sealing agent, a caulk, a patch, a mat, a filler, a wood filler, a self-ignite formulation, or a vaporizer.

9. A liquid or a semi-solid insecticide formulation for controlling crawling insects, said formulation comprises:
*Pimpinella anisum* in an amount ranging from 1% to 50% by weight of the formulation;
*Syzygium aromaticum* in an amount ranging from 1% to 50% by weight of the formulation; and
rest being an excipient.

10. The formulation as claimed in claim 9, wherein the formulation comprises a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.
